# EUROPEAN PATENT SPECIFICATION

(11) **EP 2 091 762 B1**
(45) Date of publication and mention of the grant of the patent: **21.04.2010**
(21) Application number: 06829088.1
(22) Date of filing: 22.11.2006
(51) Int. Cl.: B60C 15/04

(54) **TIRE WITH LIGHT WEIGHT BEAD CORE**
REIFEN MIT LEICHTEM WULSTKERN
PNEU AVEC TRINGLE LÉGÈRE

(43) Date of publication of application: 26.08.2009
(73) Proprietor: Pirelli Tyre S.p.A., 20126 Milano (IT)
(72) Inventor: TRESOLDI, Stefano, 20126 Milano (IT); DAGHINI, Guido, 20126 Milano (IT); RAMPANA, Barbara, 20126 Milan (IT); TIRELLI, Diego, 20126 Milano (IT)
(74) Representative: Giannesi, Pier Giovanni
(86) International application number: PCT/EP2006/011160
(87) International publication number: WO 2008/061544

(56) References cited:
- US-A- 4 320 791
- US-A- 4 823 857

## Description

The present invention relates to a tire which is provided with a light weight bead core.

In particular, the present invention relates to a tire which is provided with a light weight bead core, said bead core contributing in decreasing the overall tire weight while ensuring a good anchoring thereof to a wheel rim on which the tire is mounted.

A tire generally comprises: a carcass structure comprising at least one carcass ply; a tread band in a position radially external to the carcass structure; a belt structure interposed between the carcass structure and the tread band. A tire generally further comprises a pair of sidewalls applied to the carcass structure in axially opposite positions. The ends of the at least one carcass ply are folded back or secured to two annular reinforcing elements, i.e. the so-called "bead cores", and the tire region which comprises the bead core is known as "tire bead".

Generally, in a position radially external to the bead core, the tire bead further comprises an elastomeric insert, conventionally called "bead filling" or "bead apex", which has a substantially triangular cross-section and extends radially outwardly from the respective bead core.

A tire bead, and particularly the bead core thereof, is generally requested to perform a plurality of functions.

Firstly, a bead core performs the function of anchoring the tire carcass cords in the tire bead, the carcass cords being subjected to longitudinal stresses proportional to the tire inflation pressure and to the tire curvature ratio. The carcass cords are further subjected to longitudinal and torsional stresses which are due to the centrifugal force, the lateral thrusts and/or the torques acting on the tire during travelling thereof.

Furthermore, a bead core performs the function of anchoring the tire to a respective wheel rim thereby ensuring, in case of a tubeless tire, a sealing effect between the tire and the wheel rim, the latter being provided in correspondence of the bead mounting position and generally comprising two substantially conical coaxial surfaces which act as the supporting base for the tire beads. Said surfaces generally terminate in a flange, radially projecting outwardly, that supports the axially outer surface of the bead and against which the latter abuts by virtue of the tire inflation pressure. Proper positioning of the bead into its seat is ensured by the conical shape of the bead seat in cooperation with the bead core.

The bead core is requested to withstand relevant deformations that arise during the fitting operation of the tire on a respective wheel rim. In fact, the diameter of the radially internal annular surface of the bead core is smaller than the radially external diameter of the rim flange and is selected so that, once the tire bead has been positioned in the respective bead seat of the rim, after passing over the flange, it is pushed by the pressure of the tire inflating fluid along the diverging surface of the bead seat against the axially internal surface of the flange. Generally, the fitting of a tire on a respective rim starts with the deformation (ovalisation) of the tire bead so that a portion thereof is able to pass over the flange. Successively, the rest of the tire bead is caused to completely pass over the flange such that the bead is positioned in the closest bead seat. Then the bead is pushed axially towards the opposite bead seat so as to cause it to fall into the central groove of the rim. In this way, once the bead is located inside the abovementioned central groove, the equatorial plane of the tire may be inclined with respect to the equatorial plane of the rim so as to allow also the opposite bead to pass over the flange and be positioned in the corresponding bead seat, by means of ovalisation thereof (and hence of ovalisation of the respective bead core). Finally, the tire is inflated so that both the beads come into abutment against the axially internal surfaces of the flange. Owing to the rigidity of the bead core, the fitting/removal operations of the tire onto/from the rim require the use of levers with which it is possible to apply a force sufficient to deform the bead core, modifying the configuration from a substantially circular one to an oval one, so as to allow, as mentioned above, the bead to pass over the flange. However, the use of levers acting on the elongated elements forming the bead core may result in locally exceeding the elastic strain limits of said elements which is particularly undesirable since it may have a negative effect on the structural strength properties of the bead core during the travel of the tire and, in some cases, may also result in breakage of one or more of the elongated elements of the tire bead core.

Besides the above functions, the bead core is requested to ensure the transmission of torques (traction torques and braking torques) from the rim to the tire during the vehicle accelerations and decelerations. Therefore the anchoring of the tire to the rim is requested to be suitable so as to prevent the tire from sliding with respect to the mounting rim. This aspect, which is important for any vehicle (passenger cars, trucks, motorbikes), is particularly critical in the case of high performance (HP) and ultra high performance (UHP) tires, these tires being designed for high-powered cars which are generally involved in high operating speeds (e.g., higher than 200 km/h) and/or extreme driving conditions wherein swift and relevant accelerations/decelerations are generally caused to occur.

Usually bead cores are formed by steel wires or cords. However, alternative materials have been suggested in the art.

For example, Great Britain Patent GB 1,072,277 discloses a light weight bead core for pneumatic tires. In particular, it discloses a tire bead reinforcement comprising a hoop shaped structure of continuously wound, epoxy resin dipped, continuous filament glass fiber, said structure containing 8% by weight to 40% by weight of epoxy resin and 60% by weight to 92% by weight of glass fiber. The abovementioned bead core is said to be particularly useful for airplain tires.

Japanese Patent Application JP 04/133807 discloses a pneumatic tire characterized in that it has a bead core manufactured by annularly winding a non-metallic fiber cord having a minimum tensile modulus of 350 g/D, a maximum bending force of at least 0.1 Kg and a melting point or a softening point of at least 170°C. Preferably, said non-metallic fiber is selected from: aramid fibers, carbon fibers, glass fibers, which may also be used as composite fibers. The abovementioned bead core is said to be advantageously used in light weight tire.

However, the above reported light weight bead core may show some drawbacks.

In particular, said light weight bead core may not ensure the bead mechanical resistance (structural integrity of the tire bead) and thus the safeness thereof during use of the tire, as well as the tire uniformity (e.g., the regularity of the tire geometrical dimensions, the rigidity of the tire in the radial direction and the uniform distribution of the tire masses along the circumferential direction). Moreover, said light weight bead core may not ensure a good anchoring of the tire bead to the rim so that the torques, which are generated by the vehicle (e.g., by the engine or the brakes thereof), may be transmitted from the rim to the tire causing substantial sliding of the tire on the rim.

The Applicant has faced the problem of providing a tire whose bead core structure contribute in decreasing the overall tire weight, fact which remarkably influences the tire performances such as rolling resistance, especially in case high-powered vehicles are considered, while ensuring tire bead mechanical resistance, stable anchoring of the tire to the rim, as well as tire uniformity.

The Applicant has found that the above aims may be achieved by providing the tire with bead cores which include both elongated elements of composite material and metal elongated elements.

Accordingly, the present invention relates to a tire comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said at least one bead core comprises:
- at least one first elongated element comprising at least one composite material comprising a plurality of elongated fibers embedded in a polymeric material, said composite material having a flexural modulus, measured according to Standard ASTM D790-03, at 23°C, not lower than or equal to 10 GPa ;
- at least one second elongated element comprising at least one metal wire.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the claims which follow, the term "elongated element" is used to indicate a single wire (i.e. a monofilament), or a yarn or a cord which is obtained by stranding at least two single wires.

Preferably, the ratio (% by volume) between the amount of metal material and the amount of composite material present in the bead core of the present invention is comprised from 3% by volume to 80% by volume with respect to the total volume of the bead core. More preferably, said ratio is comprised from 5% by volume to 60% by volume with respect to the total volume of the bead core. The ranges mentioned above are particularly preferred since they may ensure a satisfactory balance among hooping force of the tire bead on the rim, high tensile strength requested to the bead core and bead core weight.

Further features and advantages will become more apparent from the detailed description of preferred but non-exclusive embodiments of a bead core in accordance with the present invention. The present description should be taken with reference to the accompanying drawings, given by way of non limiting example.

In the drawings:
- Figures 1a and 1b show a first embodiment of a bead core strip element and a bead core, respectively, according to the present invention;
- Figures 2a and 2b show a second embodiment of a bead core strip element and a bead core, respectively, according to the present invention;
- Figures 3a and 3b show a third embodiment of a bead core strip element and a bead core, respectively, according to the present invention;
- Figures 4a and 4b show a fourth embodiment of a bead core strip element and a bead core, respectively, according to the present invention;
- Figures 5a and 5b show a fifth embodiment of bead core strip elements and a bead core, respectively, according to the present invention;
- Figure 6a shows a schematic cross section of a hybrid cord which is used in a bead core in accordance with the present invention;
- Figures 6b and 6c show a sixth embodiment of a bead core strip element and a bead core, respectively, according to the present invention;
- Figure 7 shows a seventh embodiment of a bead core according to the present invention;
- Figures 8a and 8b show an annular insert and a bead core, respectively, according to an eighth embodiment of the present invention;
- Figures 9a and 9b show an annular insert and a bead core, respectively, according to a ninth embodiment of the present invention;
- Figures 10a and 10b show an annular insert and a bead core, respectively, according to a tenth embodiment of the present invention;
- Figure 11 is a schematic side view showing the convolutions of an arrangement of the bead core strip element of Figure 1a;
- Figure 12 shows a eleventh embodiment of a bead core according to the present invention;
- Figure 12a shows a twelfth embodiment of a bead core according to the present invention;
- Figure 12b shows a thirteenth embodiment of a bead core according to the present invention;
- Figure 13 is a schematic partial cross-sectional view of a tire incorporating a bead core according to the present invention.

A typical bead core structure is the so-called "Alderfer" structure which has a configuration of the type "m x n", where "m" indicates the number of axially adjacent wires or cords (obtained by stranding at least one pair of wires) and "n" indicates the number of radially superimposed layers of said cords. This structure is obtained by using a rubberized strip element comprising a predefined number of cords (usually, textile or metallic cords) and by winding (coiling) said rubberized strip element so as to form a desired number of layers arranged radially superimposed one to the other. This constructional method allows the formation of cross-sectional contours of the bead core which are of a substantially quadrangular type. Typical examples of Alderfer structures are 4x4, 5x5, 4x5 and 6x5 structures.

A further conventional bead core structure is the so-called "round cable" bead core. This type of bead core has a central core, for example obtained from a single wire which is welded end-to-end so as to form a circle, around which a further single wire is wound and finally joined to itself, preferably by means of a fastening element such as, for example a metallic (e.g., brass) clip or strip to form at least one sheath layer. Depending on the number of the sheath layer obtained, the "round cable" bead cores have different configuration such as, for example, the following: 1x1.5 mm+(6+12)x1.3 mm wherein digit "1" indicates the central core (e.g., obtained from a single wire having a diameter of 1.5 mm), digit "6" indicates that a further single wire having a diameter of 1.3 mm, is wound (for example, according to S winding direction) around the central core six times so as to form a first sheath layer, digit "12" indicates that the same further single wire is subsequently wound (for example, according to Z winding direction opposed to S winding direction) around said first sheath layer twelve times, so as to form a second sheath layer in a position radially external to said first sheath layer. Further configuration may be, for instance: 1x3.0 mm+(9)x1.5 mm, 1x3.0 mm+(8)x1.8 mm, 1x1.8 mm+(7)x1.4 mm.

A further conventional bead core structure is the so-called "single wire bead core". This is formed from a single rubberized cord which is wound so as to form a first layer of axially adjacent turns (coils); then, the same cord, is further wound so as to form a second layer in a position radially external to said first layer, and so on, so as to form several radially superimposed layers. Therefore, by varying the number of turns in each layer, it is possible to obtain cross-sectional contours of the bead core with different geometrical forms, for example a hexagonal shaped cross-section. A regular hexagonal bead core may be formed, for example, by means of 19 windings arranged in the configuration: 3-4-5-4-3. This series of numbers indicates that the individual rubberized cord is wound so as to form firstly three turns axially adjacent to each other to form a first layer; then four turns axially adjacent to each other are provided in succession so as to form a second layer radially superimposed on the first layer, followed by five turns, axially adjacent to each other, so as to form a third layer radially superimposed on the second layer, then four turns axially adjacent to each other so as to form a fourth layer radially superimposed on the third layer and finally three turns axially adjacent to each other so as to form a fifth layer radially superimposed on the fourth layer. Further configurations may be, for instance, 4-5-4-3 and 5-6-5-4.

A further conventional bead core structure is obtained by using a plurality of rubberized cords, each individual cord being radially wound onto itself so as to form a stack (i.e. a series) of radially superimposed wound turns (coils). Several stacks of turns, possibly with a different vertical extension (namely different number of wound turns radially superimposed on each other), axially adjacent to each other, thus form the abovementioned bead core. Preferably, said wires have predetermined cross sections (e.g., a substantially hexagonal cross section) so that the wires of axially adjacent coils may be coupled together to form an assembly (i.e. the bead core) that is constituted by equal and distinct elements (modular elements) and that is provided with a compact cross section, i.e. the latter does not comprise hollow spaces or interferences and has an area corresponding to the sum of the section areas of said distinct elements.

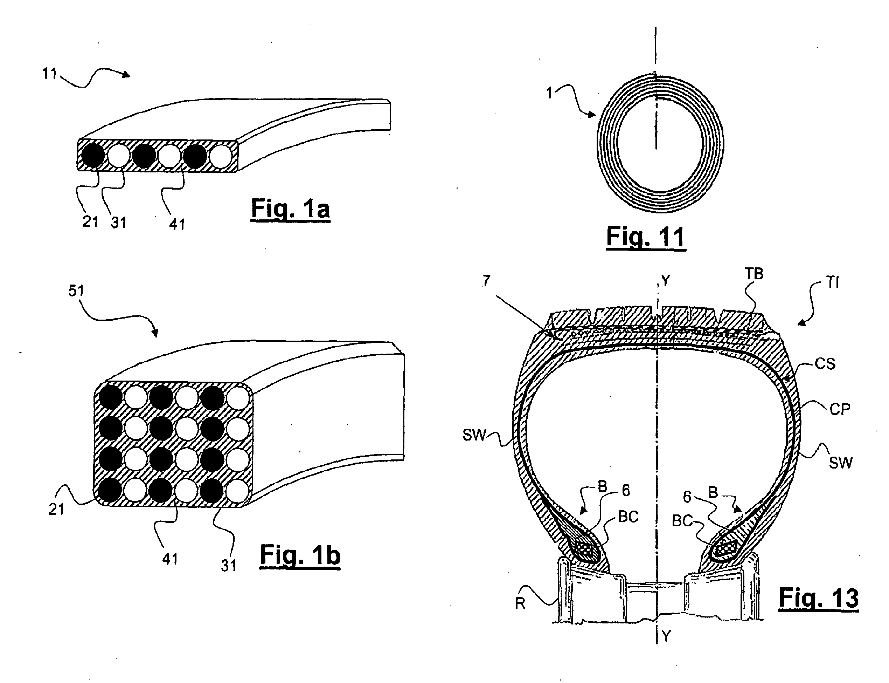

Figure 13 shows a partial cross-sectional view of a tire TI which comprises: a carcass structure CS; a tread band TB located on the crown of said carcass structure; two axially spaced sidewalls SW terminating in tire beads B. For securing the tire to a corresponding mounting rim R, each tire bead B comprises a bead core BC and a corresponding bead apex 6 located in a position radially external to the bead core BC.

The carcass structure CS comprises one or more carcass plies CP (only one being shown in Figure 13) which are associated to the bead cores BC. In accordance with the embodiment shown in Figure 13, the carcass ply CP is associated with the respective bead cores BC by turning up the carcass ply ends around the bead cores BC. Alternatively (said embodiment being not shown), the carcass ply CP has its ends integrally associated with the bead cores BC, as disclosed, for instance, in European Patent EP 928,680, according to which a green tire is manufactured by consecutively producing and assembling together on a toroidal support the tire structural elements. In details, the tire is manufactured by axially overlapping and/or radially superimposing turns of a strip-like element on the toroidal support, said strip-like element being a strip of an elastomeric material only, or a strip of elastomeric material embedding reinforcing elements thereinto, typically textile or metal cords, or a rubberized metal wire or cord. According to said process, the toroidal support is moved, preferably by a robotized system, between a plurality of work stations in each of which, through automated sequences, a particular building step of the tire is carried out.

Tire TI further comprises a belt structure 7 interposed between the carcass structure CS and the tread band TB, said belt structure preferably comprising two belt layers, usually including metal cords that are parallel to each other in each layer and crossing over those of the adjacent layers. The metal cords in each layer are symmetrically inclined with respect to the tire equatorial plane Y-Y. Preferably, in a radially outermost position, the belt structure also comprises a third belt layer which is provided with rubberized cords, preferably textile cords, that are oriented circumferentially, i.e. with a disposition at substantially zero degrees with respect to the tire equatorial plane Y-Y.

### First embodiment

Figures 1a, 1b and 11 show a first embodiment of the present invention. In particular, Figure 1a shows a perspective view of a portion of a bead core strip element 11. The strip element 11 comprises a plurality of axially adjacent elongated elements 21, 31 which are embedded in an elastomeric material 41. As schematically represented in Figure 11, a bead core 51 (a portion of which is shown, in perspective view, in Figure 1b) is obtained by winding (coiling) the strip element 11 so as to form a plurality of layers, the latter being radially superimposed one to the other to form the bead core 51. In Figure 11 the wound strip element to obtain a plurality of radially superimposed layers has been indicated with reference number 1.

The term "adjacent", as used in the present description and in the claims which follow, may or may not imply contact but always implies absence of anything of the same kind between. Two elongated elements are considered to be adjacent one to the other either if they are in contact (at least partially) or if they are not in contact (for instance, when rubber is provided in between). Two elongated elements are not considered to be adjacent one to the other if there is a third elongated element there between.

The bead core 51 shown in Figure 1b is a 6x4 "Alderfer" bead core, wherein digit "6" is the number of axially adjacent elongated elements 21, 31 which are present in each strip element 11, while digit "4" is the number of radially superimposed layers (coils) of the strip element 11.

The 6x4 bead core arrangement shown in Figure 1b is an example of the bead core according to the present invention. It is apparent that a plurality of different bead core arrangements (i.e. a bead core having a different number of layers as well as a different number of elongated elements present in each strip element) may be provided in accordance with the present invention.

According to the embodiment shown in Figure 1a, the strip element 11 is formed of six axially adjacent elongated elements 21, 31. In particular, the strip element 11 is formed of second metal elongated elements 31 and of first elongated elements 21 which are made of composite material.

According to the embodiment shown in Figure 1a, axially adjacent elongated elements 21, 31 are arranged in an alternate configuration wherein a second elongated element 31 is interposed between two first elongated elements 21 so as to obtain a 1:1 sequence.

Therefore, the bead core 51 of Figure 1b comprises first series of the second elongated elements 31 and second series of the first elongated elements 21.

According to the present invention, the term "series" is used to indicate a stack of radially superimposed coils of a single elongated element.

Therefore, the bead core 51 comprises at least one first series of the second elongated element 31 and at least one second series of the first elongated element 21. In detail, the bead core 51 comprises three first series of the second elongated elements 31 and three second series of the first elongated elements 21, said first and second series being arranged in an alternate configuration. More in detail, according to this first embodiment, each first series is axially adjacent to at least one second series.

The Applicant has found that the tire integrity, and thus the driving safeness, may be advantageously improved by arranging in the tire the bead core so as to have its side containing the metal elongated element(s) facing the rim flange. This means that it is particularly advantageous to provide a strip element wherein the metal elongated element(s) is (are) positioned at the strip element axial edge which, when integrated in the bead core, faces the rim flange. In detail, the Applicant has found that it is preferable to provide a bead core whose metal elongated element(s) are located in proximity of the rim flange and the elongated element(s) made of composite material are located in proximity of the inner surface of the tire. In that way, the bead core portion more resistant to mechanical stresses is positioned in correspondence of the rim flange where the most intense stresses are generated during travelling of the tire and during the mounting/demounting operations of the tire onto/from the rim.

According to the present invention, said first elongated elements 21 are made of composite material comprising a plurality of elongated fibers embedded in a polymeric material, said composite material having a flexural modulus, measured according to Standard ASTM D790-03, at 23°C, not lower than or equal to 10 GPa, preferably of from 20 GPa to 200 GPa.

According to a further preferred embodiment, said composite material has an ultimate tensile strength, measured according to Standard ASTM D3916-02, at 23°C, not lower than or equal to 600 MPa.

According to a further preferred embodiment, said composite material has a tensile modulus, measured according to Standard ASTM D3916-02, at 23°C, not lower than or equal to 20 GPa.

According to a further preferred embodiment, said composite material has a specific gravity, measured according to Standard ASTM D792-00, lower than or equal to 3.0 g/cm³.

According to one preferred embodiment, said polymeric material has a flexural modulus, measured according to Standard ASTM D790-03, at 23°C, not lower than or equal to 0.5 GPa.

According to a further preferred embodiment, said polymeric material has an ultimate tensile strength, measured according to Standard ASTM D638-03, at 23°C, not lower than or equal to 40 MPa.

According to a further preferred embodiment, said polymeric material may be selected, for example, from thermoplastic resins, termosetting resins, or mixtures thereof. Thermosetting resins are particularly preferred.

According to a further preferred embodiment, said thermoplastic resins may be selected, for example, from: nylon-6,6, nylon-6, nylon-4,6, polyester (such as, for example, polyethylene terephthalate, polyethylene naphthalate), polyether ether ketone, polycarbonate, polyacetal, or mixtures thereof. Polyethylene tetrephthalate is particularly preferred.

According to a further preferred embodiment, said thermosetting resins may be selected, for example, from: vinyl-ester resins, epoxy resins, unsaturated polyester resin (such as, for example, isophthalic polyester resins), phenolic resins, melamine resins, polyimide resins, bismaleimide resins, furan resins, silicone resins, allyl resins, or mixtures thereof. Vinyl ester resins, epoxy resins, or mixtures thereof, are particularly preferred.

According to one preferred embodiment, said elongated fibers have an ultimate tensile strength, measured according to Standard ASTM D885-03, not lower than or equal to 1500 MPa.

According to a further preferred embodiment, said elongated fibers have a tensile modulus, measured according to Standard ASTM D885-03, not lower than or equal to 50 GPa.

According to a further preferred embodiment, said elongated fibers may be selected, for example, from: glass fibers, aromatic polyamide fibers (for example, aramid fibers such as, for example, Kevlar^{®}), polyvinyl alcohol fibers, carbon fibers, or mixtures thereof. Glass fibers are particularly preferred. Glass fibers of type "E" are still particularly preferred.

According to one preferred embodiment, said elongated fibers are present in the composite material in an amount of from 30% by weight to 95% by weight, preferably of from 50% by weight to 90% by weight, with respect to the total weight of the composite material.

Advantageously, said composite material may be manufactured continuously by pultrusion. This is a known technique which comprises unwinding continuous fibers from a reel, and dipping them into a polymeric material (i.e. a resin) bath to impregnate them. For example, when thermosetting resins are used, the fibers are passed through a liquid resin, or through a liquid mixture of its monomers and/or oligomers, and the thus impregnated fibers are passed through a die to give a desired shape to the composite material and to remove excessive uncured resin liquid and bubbles entrapped in the bundle. Then, the obtained composite material is passed through a tubular mold where it is heated to form a semi-cured composite material. Subsequently, the obtained semi-cured composite material is subjected to a further curing by means, for example, of UV radiation, or heating, to complete the curing reaction. When thermoplastic resins are used, the composite material may be produced according to the same manner as in the case of using the thermosetting resins, in which a bath of fused resins may be used as a liquid bath. Optionally, resin powder may be previously sprinkled around the fibers to promote the impregnation. Optionally, a further coating layer of thermoplastic resin, preferably selected from those above disclosed, may be applied to the obtained composite material. To this aim, the composite material is passed through a bath of fused resin and the thus impregnated composite material is passed through a die to obtain said coating layer.

Examples of composite materials which may be used according to the present invention and are available commercially are the products known by the name of Glassline^{®} Getev from Tecniconsult S.p.A., Twintex^{®} from Saint-Gobain Vetrotex.

Optionally, in order to improve its adhesion to the elastomeric material 41, said first elongated elements 21 may be surface-treated by immersing them into a solution containing a mixture of resorcinol-formaldehyde resin and a rubber latex (this mixture being commonly denoted by the expression "resorcinol-formaldehyde latex RFL"), and subsequently drying them. The latex used may be: vinylpyridine/styrene-butadiene (VP/SBR), styrene-butadiene (SBR); latex of natural rubber (NR); carboxylated and hydrogenated acrylonitrile-butadiene (X-HNBR); hydrogenated acrylonitrile (HNBR); acrylonitrile (NBR), ethylenepropylene-diene monomer (EPDM), chlorosulfonated polyethylene (CSM); or a mixture thereof.

Optionally, said first elongated elements 21 may be impregnated with an adhesive in a solvent medium for obtaining an additional layer covering the fibers. Preferably, the adhesive in a solvent medium is a blend of polymers, possibly halogenated polymers, organic compounds, such as isocyanates, and mineral fillers, such as carbon black. The additional layer, forming a ring around said elongated elements, is particularly advantageous for ensuring good adhesion to certain types of rubber, such as acrylonitrile (NBR), hydrogenated acrylonitrile (HNBR), carboxylated hydrogenated acrylonitrile (X-HNBR), vulcanizable hydrogenated acrylonitrile (ZSC), chlorosulfonated polyethylene (CSM), alkylated chlorosulfonated polyethylene (ACSM), or ethylenepropylenediene monomer (EPDM)..

According to one preferred embodiment, said first elongated elements have a diameter of from 0.2 mm to 3.0 mm, preferably of from 0.6 mm to 2.5 mm.

According to the present invention, said second elongated elements 31 are made of metal.

According to one preferred embodiment, said second elongated elements have a diameter of from 0.2 mm to 3.0 mm, preferably of from 0.6 mm to 2.5 mm.

According to a further preferred embodiment, said second elongated elements 31 are made of steel or an alloy thereof. The steel may be a standard NT (normal tensile) steel whose breaking strength ranges from 2600 N/mm² (or 2600 MPa) to 3200 N/mm², a HT (High Tensile) steel whose breaking strength ranges from 3000 N/mm² to 3600 N/mm², a SHT (Super High Tensile) steel whose breaking strength ranges from 3300 N/mm² to 3900 N/mm², a UHT (Ultra High Tensile) steel whose breaking strength ranges from 3600 N/mm² to about 4200 N/mm². Said breaking strength values depend in particular on the quantity of carbon contained in the steel.

According to a further preferred embodiment, said second elongated elements 31 consist of a metal monofilament, i.e. of a single metal wire.

Alternatively, said second elongated elements 31 are obtained by stranding at least two metal wires.

### Second embodiment

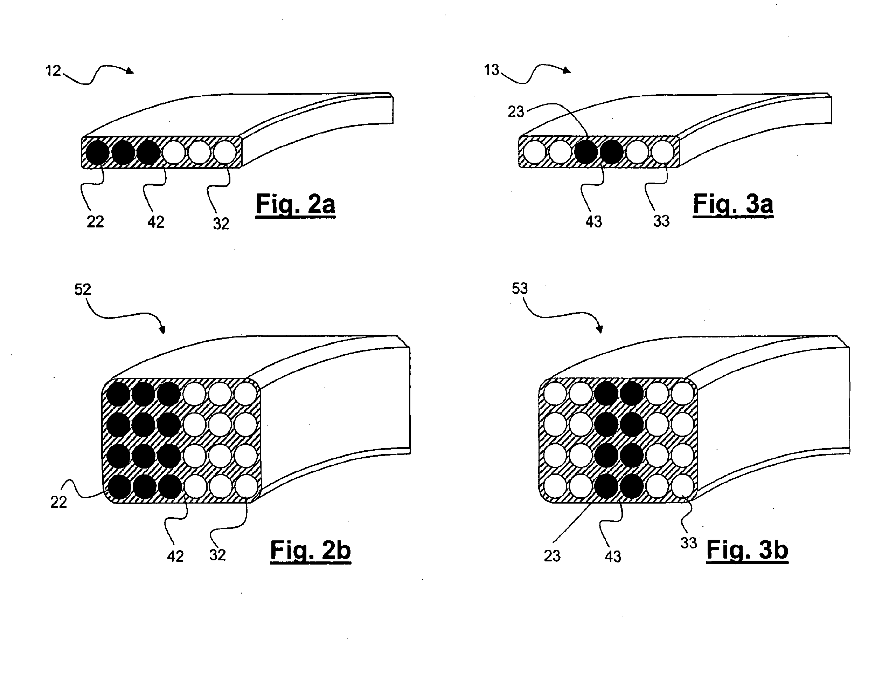

Figures 2a and 2b show a perspective view of a portion of a bead core strip element 12 and of a bead core 52, respectively, according to a second embodiment of the present invention.

The bead core strip element 12 shown in Figure 2a comprises a plurality of axially adjacent elongated elements 22, 32 which are embedded in an elastomeric material 42. In details, the bead core strip element 12 comprises three first elongated elements 22 made of composite material and three second metal elongated elements 32.

As schematically represented in Figure 11 and as already described with reference to the first embodiment of the present invention, the bead core 52 (partially shown in Figure 2b) is obtained by winding (coiling) the strip element 12 to form a plurality of layers radially superimposed to each other. In Figure 11 the wound strip element to obtain a plurality of radially superimposed layers has been indicated with reference number 1.

The bead core 52 shown in Figure 2b is a 6x4 "Alderfer" bead core already described with reference to the first embodiment of the present invention.

According to the second embodiment shown in Figure 2a, the strip element 12 is formed of six axially adjacent elongated elements 22, 32. In particular, differently from the first embodiment described above wherein the first and second elongated elements are arranged in alternate configuration, according to the embodiment shown in Figure 2a the second elongated elements 32 are axially adjacent and positioned at a first axial end of the strip element 12 while the first elongated elements 22 are axially adjacent and positioned at a second axial end of the strip element 12, the second axial end being opposite to the first axial end of said strip element.

Therefore, according to this second embodiment, the bead core 52 is provided with second elongated elements 32 that form a portion of the bead core and with first elongated elements 22 that form the remaining portion of the bead core.

The bead core 52 of Figure 2b comprises at least one first series of the second elongated elements 32 and at least one second series of the first elongated elements 22. In detail, the bead core 52 comprises three first series of the second elongated elements 32 and three second series of the first elongated elements 22, wherein the three first series are axially adjacent to form the axially outer portion of the bead core while the three second series are axially adjacent to form the axially inner portion of the bead core.

Preferably, the second metal elongated elements 32 form the axially outer portion of the bead core 52, i.e. the bead core portion which is close to the rim flange.

Preferably, the first elongated elements 22 made of composite material form the axially inner portion of the bead core 52, i.e. the bead core portion which is close to the inner surface of the tire and thus to the cylindrical central groove of the rim.

Preferably, the elongated elements 22 and 32 of this embodiment have the same characteristics of the elongated elements 21 and 31 of the first embodiment, respectively.

### Third embodiment

Figures 3a and 3b show a perspective view of a portion of a bead core strip element 13 and of a bead core 53, respectively, according to a fourth embodiment of the present invention.

The bead core strip element 13 shown in Figure 3a comprises a plurality of axially adjacent elongated elements 23, 33 which are embedded in an elastomeric material 43. In details, the bead core strip element 13 comprises two first elongated elements 23 made of composite material and four second metal elongated elements 33.

As schematically represented in Figure 11 and as already described with reference to the first embodiment of the present invention, the bead core 53 (partially shown in Figure 3b) is obtained by winding (coiling) the strip element 13 to form a plurality of layers radially superimposed to each other. In Figure 11 the wound strip element to obtain a plurality of radially superimposed layers has been indicated with reference number 1.

The bead core 53 shown in Figure 3b is a 6x4 "Alderfer" bead core already described with reference to the first embodiment of the present invention.

According to the fourth embodiment shown in Figure 3a, the strip element 13 is formed of six axially adjacent elongated elements 23, 33. Similarly to the first embodiment described above, Figure 3a shows an alternate sequence of first and second elongated elements wherein the alternate unit is formed of two elongated elements of the same type. In detail, according to this embodiment, the strip element 13 is formed of two second elongated elements 33 that are positioned at the axial ends of the strip element 13, while two first elongated elements 23 are positioned in the centre of the strip element 13, i.e. between the two units of the second elongated elements 33.

Therefore, according to this fourth embodiment, the bead core 53 is provided with second elongated elements 33 that form the axially inner and outer portions of the bead core and with first elongated elements 23 that form the central portion of the bead core.

Preferably, the elongated elements 23 and 33 of this embodiment have the same characteristics of the elongated elements 21 and 31 of the first embodiment, respectively.

### Fourth embodiment

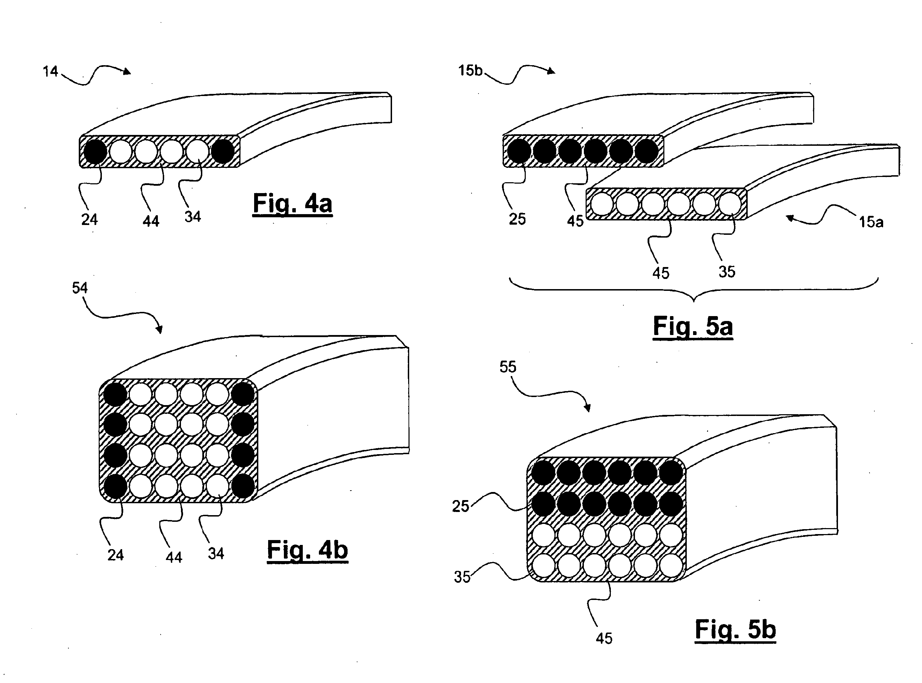

Figures 4a and 4b show a perspective view of a portion of a bead core strip element 14 and of a bead core 54, respectively, according to a fourth embodiment of the present invention.

The bead core strip element 14 shown in Figure 4a comprises a plurality of axially adjacent elongated elements 24, 34 which are embedded in an elastomeric material 44. In details, the bead core strip element 14 comprises two first elongated elements 24 made of composite material and four second metal elongated elements 34.

As schematically represented in Figure 11 and as already described with reference to the first embodiment of the present invention, the bead core 54 (partially shown in Figure 4b) is obtained by winding (coiling) the strip element 14 to form a plurality of layers radially superimposed to each other. In Figure 11 the wound strip element to obtain a plurality of radially superimposed layers has been indicated with reference number 1.

The bead core 54 shown in Figure 4b is a 6x4 "Alderfer" bead core already described with reference to the first embodiment of the present invention.

According to the fourth embodiment shown in Figure 4a, the strip element 14 is formed of six axially adjacent elongated elements 24, 34. In particular, according to said embodiment the first elongated elements 24 are positioned at the axial ends of the strip element 14 while the second elongated elements 34, which are axially adjacent to each other, form the central portion of the strip element 14.

Therefore, according to this fourth embodiment, the bead core 54 is provided with first elongated elements 24 that form the axially inner and outer portions of the bead core and with second elongated elements 34 that form the central portion of the bead core.

Preferably, the elongated elements 24 and 34 of this embodiment have the same characteristics of the elongated elements 21 and 31 of the first embodiment, respectively.

### Fifth embodiment

Figures 5a and 5b show a perspective view of a portion of a bead core strip elements 15a and 15b and of a bead core 55, respectively, according to a fifth embodiment of the present invention.

The bead core 55 is obtained by using two bead core strip elements 15a, 15b. In detail, the first bead core strip element 15a comprises only second metal elongated elements 35 while the second bead core strip element 15b comprises only first elongated elements 25 made of composite material.

As schematically represented in Figure 11 and as already described with reference to the first embodiment of the present invention, the bead core 55 (partially shown in Figure 5b) is obtained by winding (coiling) the strip elements 15a, 15b to form a plurality of layers radially superimposed to each other. In detail, the first strip element 13a is wound (as shown in Figure 11) to form a desired number of layers (two layers in Figure 5b) which are radially superimposed one to the other. Successively, and similarly to the winding of the first strip element 15a, also the second strip element 15b is wound to form a desired number of layers (two layers in Figure 5b), said layers of the second strip element 15b being radially superimposed to the layers of the first strip element 15a. The last layer (i.e. the radially outer layer) of the first strip element 15a is mechanically associated, e.g., by butt-splicing, to the first layer (i.e. the radially outer layer) of the second strip element 15b.

The bead core 55 shown in Figure 5b is a 6x4 "Alderfer" bead core already described with reference to the first embodiment of the present invention.

Therefore, according to this fifth embodiment, the bead core 55 is provided with second elongated elements 35 that form the radially inner portion of the bead core and with first elongated elements 25 that form the radially outer portion of the bead core.

Alternatively (this embodiment being not shown), the bead core 55 is provided with first elongated elements 25 that form the radially inner portion of the bead core and with second elongated elements 35 that form the radially outer portion of the bead core.

Preferably, the elongated elements 25 and 35 of this embodiment have the same characteristics of the elongated elements 21 and 31 of the first embodiment, respectively.

### Sixth embodiment

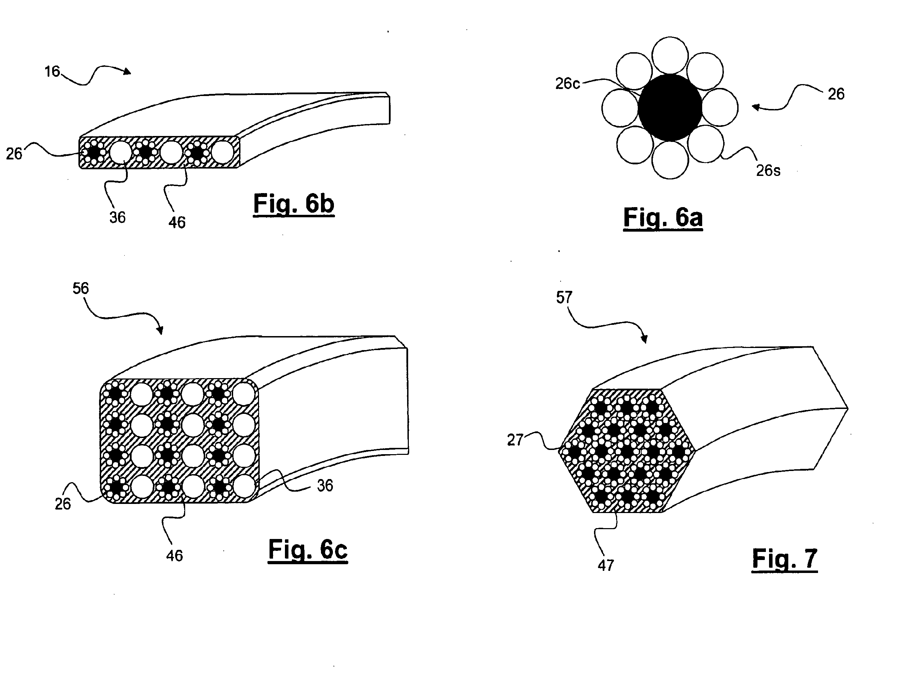

Figures 6b and 6c show a perspective view of a portion of a bead core strip element 16 and of a bead core 56, respectively, according to a sixth embodiment of the present invention.

Figures 6a shows a cross-sectional view of a cord 26 which is used for producing the bead core 56 partially shown in Figure 6c.

As indicated in Figure 6b, the strip element 16 comprises six axially adjacent elongated elements 26, 36 which are embedded in an elastomeric material 46. In detail, the strip element 16 comprises three second elongated elements 36 and three further elongated elements 26 which are axially arranged in an alternate configuration wherein a second elongated element 36 is interposed between two further elongated elements 26 so as to obtain a 1:1 sequence.

According to this embodiment, the second elongated element 36 is made of metal. Preferably, the second elongated element 36 is made of steel or an alloy thereof.

According to this embodiment, the further elongated element 26 is a cord which comprises at least one second metal elongated element 26s and at least one first elongated element 26c which is made of composite material, the at least one second metal elongated element 26s being stranded together with the at least one first elongated element 26c.

As shown in Figure 6a, preferably the further elongated element 26 comprises a first elongated element 26c that is surrounded by a crown of second metal elongated elements 26s. In other words, the further elongated element 26 is obtained by stranding a plurality of second metal elongated elements 26s around a first elongated element 26c, the latter representing the cord core.

Preferably, the second elongated element 26s is made of metal. Preferably, the second elongated element 26s is made of steel or an alloy thereof.

Preferably, the diameter of the cord 26 is of from 0.8 mm to 2.5 mm. More preferably, the diameter of the cord 26 is of from 1.5 mm to 2.0 mm.

Preferably, the number of the second elongated elements 26s, which are stranded around the elongated element 26c, is of from 3 to 8.

Preferably, the twisting pitch of the second elongated elements 26s is of from 12 mm to 22 mm.

Alternatively (this embodiment being not shown), the further elongated element 26 comprises a second metal elongated element which is surrounded by a crown of first elongated elements. In other words, the further elongated element 26 is obtained by stranding a plurality of second elongated elements around a second elongated element, the latter being the cord core.

As schematically represented in Figure 11 and as already described with reference to the first embodiment of the present invention, the bead core 56 (partially shown in Figure 6c) is obtained by winding (coiling) the strip element 16 to form a plurality of layers radially superimposed to each other. In Figure 11 the wound strip element to obtain a plurality of radially superimposed layers has been indicated with reference number 1.

The bead core 56 shown in Figure 6c is a 6x4 "Alderfer" bead core already described with reference to the first embodiment of the present invention.

Preferably, the elongated elements 26c and 36 and 26s of this embodiment have the same characteristics of the elongated elements 21 and 31 of the first embodiment, respectively.

### Seventh embodiment

Figure 7 shows a perspective view of a portion of a bead core according to a seventh embodiment of the present invention. In detail, the bead, core 57 is obtained by winding a single rubberized elongated element 27.

According to this embodiment, the single elongated element 27, which is used for obtaining the bead core 57, is that shown in Figure 6a (element 26) and already described with reference to the sixth embodiment.

In detail, the bead core 57 is obtained by winding the single elongated element 27 (which is embedded in an elastomeric material 47) so as to form a first layer of axially adjacent turns (coils); then, in a position radially external to said first layer, the same elongated element is further coiled so as to form a second layer in a position radially external to the first layer, and so on, so as to form several radially superimposed layers. Therefore, by varying the number of turns in each layer, it is possible to obtain cross-sectional contours of the bead core with different geometrical forms. For example, it is possible to obtain a bead core with a hexagonal shaped cross-section as shown in Figure 7.

Figure 7 shows a regular hexagonal bead core which is formed by 19 windings arranged in the configuration: 3-4-5-4-3. This series of numbers indicates that the single rubberized elongated element is coiled so as to form: i) firstly three turns axially adjacent to each other to form a first layer; ii) a second layer consisting of four turns axially adjacent to each other, the second layer being radially superimposed to the first layer; iii) a third layer consisting of five turns axially adjacent to each other, said third layer being radially superimposed to the second layer; iv) a fourth layer consisting of four turns axially adjacent to each other, said fourth layer being radially superimposed to the third layer; v) a fifth layer consisting of three turns axially adjacent to each other, said fifth layer being radially superimposed to the fourth layer. The first layer is the radially inner one and the fifth layer is the radially outer one of the bead core 57.

### Eighth embodiment

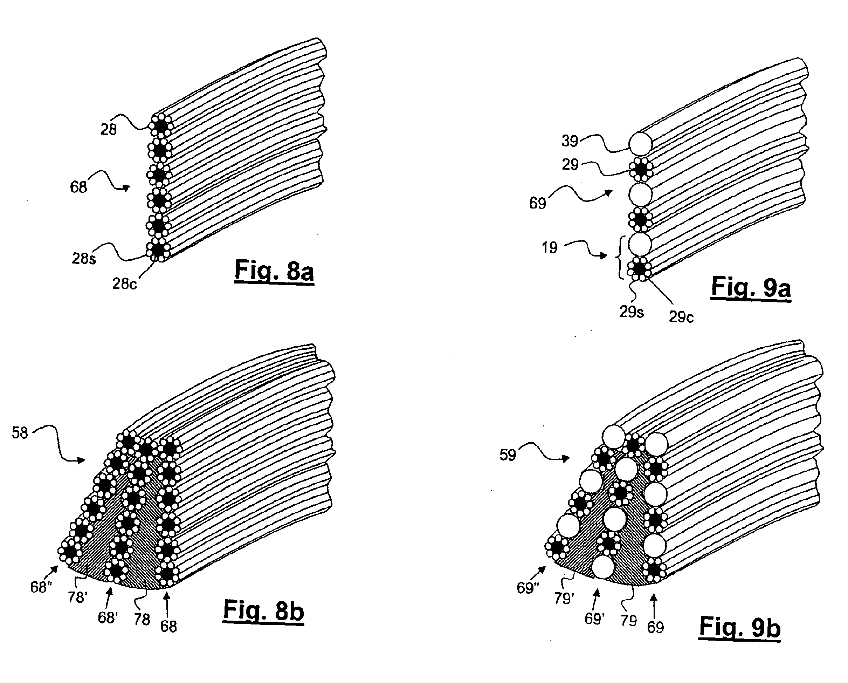

Figures 8a and 8b show, respectively, a perspective view of an annular insert 68 and of a bead core 58, said bead core comprising two or more annular inserts 68, according to a eighth embodiment of the present invention.

In detail, the bead core 58 is described, for instance, in European Patent EP 928,680 mentioned above, according to which a tire bead comprises an annular structure which includes at least one annular insert, the latter being substantially in the form of a circle ring concentric with the geometric axis of rotation of a toroidal support on which the tire is manufactured and located close to a corresponding inner circumferential edge of a tire first carcass ply. According to this document, the annular insert is made of at least one elongated element which is wound up to form a plurality of substantially concentric coils. Generally, combined with a first annular insert is a second annular insert substantially extending in the form of a respective circle ring and coaxially disposed in side by side relationship with the first annular insert. Interposed between the first and second annular inserts is at least one filling body made of elastomeric material. Moreover, a third annular insert may be combined with the second annular insert by interposing a further filling body between the second and the third annular inserts.

According to the embodiment shown in Figure 8a, the annular insert 68 is obtained by winding an elongated element 28 which forms a plurality of substantially concentric coils.

In detail, the elongated element 28, which is used for obtaining the annular insert 68, corresponds to the elongated element 26 of Figure 6a described above. In particular, the elongated element 28 is a cord which comprises at least one first elongated element 28c made of composite material and at least one second metal elongated element 28s. More particularly, the elongated element 28 comprises a first elongated element 28c which is surrounded by a plurality of second metal elongated element 28s which are stranded with said first elongated element 28c.

Alternatively (this embodiment being not shown), the elongated element 28 comprises a second metal elongated element which is surrounded by a crown of first elongated elements. In other words, the elongated element 28 is obtained by stranding a plurality of first elongated elements around a second elongated element, the latter being the cord core.

Preferably, the bead core 58 is formed of more than one annular insert 68. According to the embodiment shown in Figure 8b, the annular insert 68 is associated to a second annular insert 68', a filling body 78 being interposed therebetween.

Preferably, the second annular insert 68' is identical to the first annular insert 68, i.e. the second annular insert is made of the elongated element 28 described above. Alternatively (this embodiment being not shown), the second annular insert 68' may be obtained by winding a rubberized metal elongated element (e.g., the second metal elongated element 31 described with reference to the first embodiment). Alternatively (this embodiment being not shown), the second annular insert 68' may be obtained by winding a rubberized elongated element made of composite material (e.g., the second elongated element 21 described with reference to the first embodiment).

Preferably, the second annular insert 68' is associated to a third annular insert 68", a second filling body 78' being interposed therebetween. The third annular insert 68" is identical to the first annular insert 68, i.e. the third annular insert is made of the elongated element 28 described above. Alternatively (this embodiment being not shown), the third annular insert 68" may be obtained by winding a rubberized metal elongated element (e.g., the second metal elongated element 31 described with reference to the first embodiment). Alternatively (this embodiment being not shown), the third annular insert 68" may be obtained by winding a rubberized elongated element made of composite material (e.g., the first elongated element 21 described with reference to the first embodiment).

The filling bodies are preferably made of an elastomeric material having a hardness included between 70° and 92° Shore A.

### Ninth embodiment

Figures 9a and 9b show, respectively, a perspective view of an annular insert 69 and of a bead core 59, said bead core comprising two or more annular inserts 69, according to a ninth embodiment of the present invention.

As described with reference to the eighth embodiment, the bead core 59 may be obtained as disclosed, for instance, in European Patent EP 928,680 mentioned above.

According to the embodiment shown in Figure 9a, the annular insert 69 is obtained by winding a strip element 19 which comprises an elongated element 39 and a further elongated element 29, the winding of said strip 19 forming a plurality of substantially concentric coils which define the annular insert 69.

According to this embodiment, the further elongated element 29 corresponds to the elongated element 26 of Figure 6a described above. In particular, the further elongated element 29 is a cord which comprises at least one first elongated element 29c made of composite material and at least one second metal elongated element 29s. More particularly, the further elongated element 29 comprises a first elongated element 29c which is surrounded by a plurality of second metal elongated element 29s which are stranded with said first elongated element 28c.

Alternatively (this embodiment being not shown), the further elongated element 29 comprises a second metal elongated element which is surrounded by a crown of first elongated elements. In other words, the further elongated element 29 is obtained by stranding a plurality of first elongated elements around a second elongated element, the latter being the cord core.

According to this embodiment, the elongated element 39 is preferably made of metal. Preferably, said metal material is steel or an alloy thereof.

Alternatively (this embodiment being not shown), the elongated element 39 is made of composite material.

Preferably the bead core 59 comprises more than one annular insert 69. According to the embodiment shown in Figure 9b, the annular insert 69 is associated to a second annular insert 69', a filling body 79 being interposed therebetween.

Preferably, the second annular insert 69' is identical to the first annular insert 69, i.e. the second annular insert is obtained by winding the strip element 19 described above. Alternatively (this embodiment being not shown), the second annular insert 69' may be obtained by winding a rubberized metal elongated element (e.g., the second metal elongated element 31 described with reference to the first embodiment). Alternatively (this embodiment being not shown), the second annular insert 69' may be obtained by winding a rubberized elongated element made of composite material (e.g., the first elongated element 21 described with reference to the first embodiment).

Preferably, the second annular insert 69' is associated to a third annular insert 69", a second filling body 79' being interposed therebetween. Preferably, the third annular insert 69" is identical to the first annular insert 69. Alternatively (this embodiment being not shown), the second annular insert 69" may be obtained by winding a rubberized metal elongated element (e.g., the second metal elongated element 31 described with reference to the first embodiment). Alternatively (this embodiment being not shown), the second annular insert 69" may be obtained by winding a rubberized elongated element made of composite material (e.g., the first elongated element 21 described with reference to the first embodiment).

### Tenth embodiment

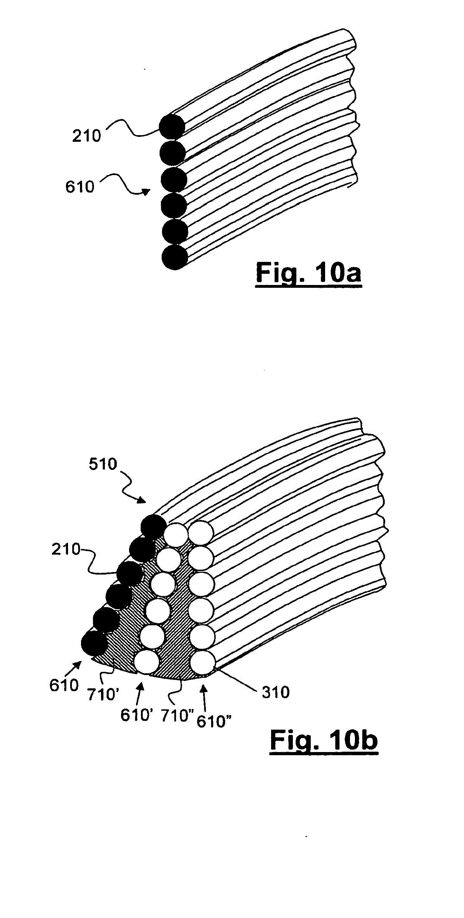

Figures 10a and 10b show, respectively, a perspective view of an annular insert 610 and of a bead core 510, said bead core comprising two or more annular inserts 610, according to a tenth embodiment of the present invention.

As described with reference to the eighth embodiment above, the bead core 510 is obtained as disclosed, for instance, in European Patent EP 928,680 mentioned above.

Bead core 510 comprises three annular inserts 610, 610', 610" and two filling bodies 710, 710' interposed therebetween. Each of the annular inserts 610, 610', 610" is substantially in the form of a circle ring and is located close to a corresponding inner circumferential edge of a tire carcass ply.

According to this embodiment, the annular inserts 610, 610', 610" are made of a single rubberized elongated element which is wound to form a plurality of substantially concentric coils.

According to the preferred embodiment shown in Figure 10b, the annular inserts 610', 610" are made of a metal elongated element 310, while the third annular insert 610 is obtained by winding an elongated element 210 made of composite material. Preferably, the elongated elements 210 and 310 of this embodiment are the same as, and have the same characteristics of, respectively, the elongated elements 21 and 31 of the first embodiment.

Preferably, the annular insert. 610 that is obtained by winding the elongated element 210 made of composite material is arranged at the axially inner portion of the bead core 510, i.e. the bead core portion that is close to the inner surface of the tire.

### Eleventh embodiment

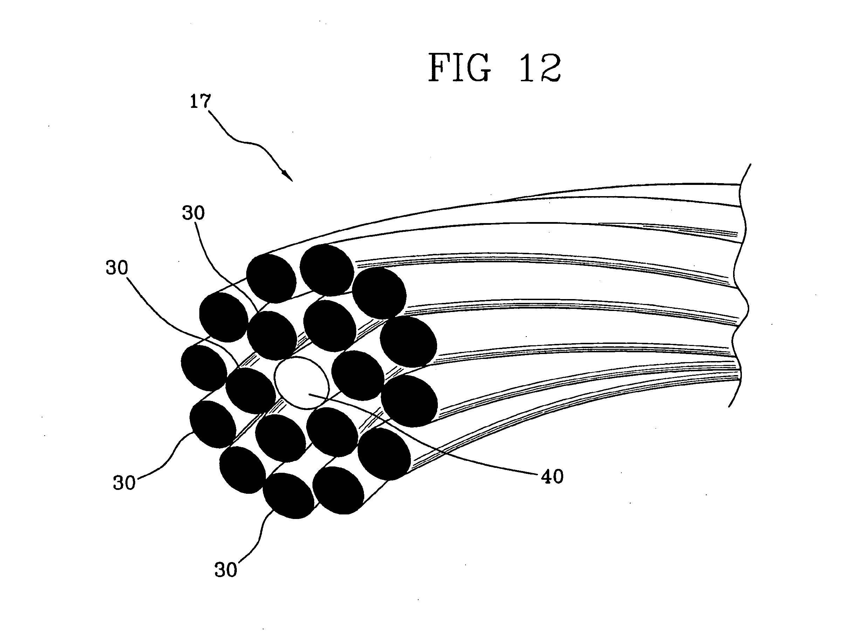

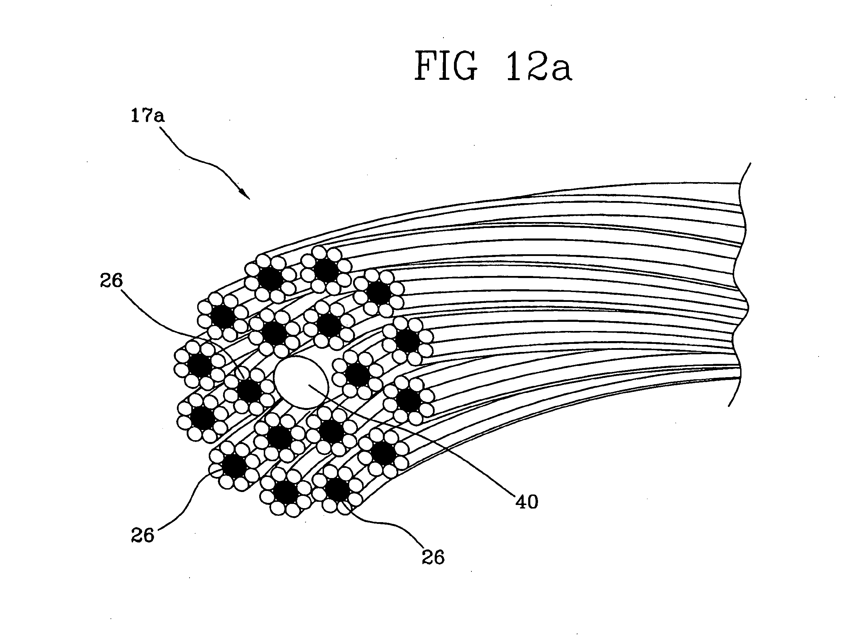

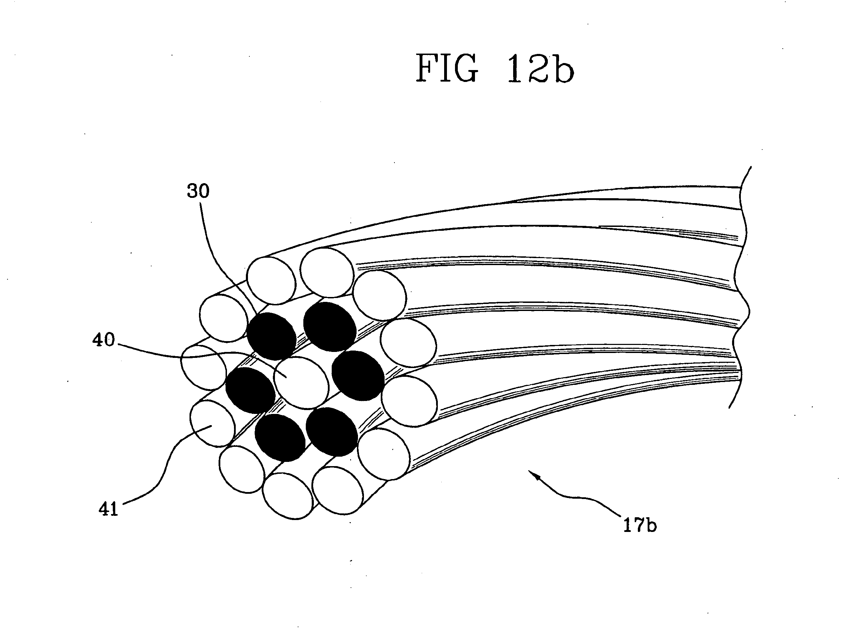

Figure 12 shows a perspective view of a portion of a "round cable" bead core according to a eleventh embodiment of the present invention.

The "round cable" bead core 17 shown in Figure 12 comprises a central core made of a second elongated element 40 which is welded end-to-end so as to form a circle, around which a first elongated element 30 is wound (S direction) and finally joined to itself to form a first sheath layer. Then, the same first elongated element 30 is wound (Z direction) around said first sheath layer and finally joined to itself to form a second sheath layer radially external to said first sheath layer.

The "round cable" bead cores shown in Figure 12 has the following configuration: 1x1.5 mm+(6+12)x1.3 mm.

The central core shown in Figure 12 has a circular cross-section. Alternatively, the central core may be oblong or may have a triangular shape (this embodiments being not shown). In this case, the sheath layer(s) wrapping the resultant "round cable" bead core show the same shape of the central core.

Preferably, the elongated elements 30 and 40 of this embodiment are the same as, and have the same characteristics of, respectively, the elongated elements 21 and 31 of the first embodiment.

### Twelfth embodiment

Figure 12a shows a perspective view of a portion of a "round cable" bead core according to a twelfth embodiment of the present invention.

The "round cable" bead core 17a shown in Figure 12a comprises a central core made of a second elongated element 40 which is welded end-to-end so as to form a circle, around which a further elongated element 26 is wound (S direction) and finally joined to itself to form a first sheath layer. Then, the same further elongated element 26 is wound (Z direction) around said first sheath layer and finally joined to itself to form a second sheath layer radially external to said first sheath layer.

The "round cable" bead cores shown in Figure 12a has the following configuration: 1x1.5 mm+(6+12)x1.3 mm.

Preferably, the elongated element 40 of this embodiment is the same as, and has the same characteristics of, the elongated element 31 of the first embodiment.

The further elongated element 26 corresponds to the elongated element 26 of Figure 6a described above.

Alternatively (said embodiment being not shown), said first sheath layer may be made of a second elongated element 40.

Alternatively (said embodiment being not shown), said second sheath layer may be made of a second elongated element 40.

### Thirteenth embodiment

Figure 12b shows a perspective view of a portion of a "round cable" bead core according to a thirteenth embodiment of the present invention.

The "round cable" bead core 17b shown in Figure 12b comprises a central core made of a second elongated element 40 which is welded end-to-end so as to form a circle, around which a first elongated element 30 is wound (S direction) and finally joined to itself to form a first sheath layer. Then, a second elongated element 40 is wound (Z direction) around said first sheath layer and finally joined to itself to form a second sheath layer radially external to said first sheath layer.

The "round cable" bead cores shown in Figure 12b has the following configuration: 1x1.5 mm+(6+12)x1.3 mm.

Preferably, the elongated elements 30 and 40 of this embodiment are the same as, and have the same characteristics of, respectively, the elongated elements 21 and 31 of the first embodiment.

Alternatively (said embodiment being not shown), said first sheath layer may be made of a second elongated element 40 and said said second sheath layer may be made of a first elongated element 30.

For further description of the invention, some illustrative examples are given below.

### Example 1

A bead core (bead core A) similar to those described with reference to the first embodiment of the present invention shown in Figure 1b was obtained by winding a strip element comprising five elongated elements to produce five radially superimposed layers so as to obtain a 5x5 Alderfer structure.

A bead core (bead core B) having the same 5x5 Alderfer structure of bead core A, was manufactured with conventional steel wires.

The characteristics of the obtained bead cores are given in Table 1 below.

**TABLE 1**

| | Bead core A (invention) | Bead core B (comparative) |
|---|---|---|
| Bead core | Alderfer 5X5 | Alderfer 5X5 |
| Circumference of the drum* | 1464 mm | 1464 mm |
| Number of metal elongated elements in each strip element | 3 | 5 |
| Number of metal wires in each elongated element | 1 | 1 |
| Metal | steel 0.96 NT | steel 0.96 NT |
| Breaking load** of each metal elongated element | 1450 N | 1450 N |
| Diameter of each metal elongated element | 0.96±0.02 mm | 0.96±0.02 mm |
| Weight of each metal elongated element | 5.7 g/m | 5.7 g/m |
| Number of elongated elements made of composite material*** | 2 | - |
| Elongated element made of composite material*** | Glassline^{®} Getev 100/101 | - |
| Diameter of the elongated element made composite material*** | 1.0±0.04 mm | - |
| Weight of the elongated elements made of composite material*** | 1.519 g/m | - |
| Breaking load** of the elongated elements made of composite material*** | 1200 N | - |
| Weight of the bead core | 147.3 g | 208.6 g |
| Minimum theorical breaking load** of the bead core | 33.7 kN | 36.3 kN |

| | | |
|---|---|---|
| *: circumference of the drum on which the first turn of the bead core strip element is wound; **: measured according to Standard ASTM D4975-02; ***: Glassline^{®} Getev 100/101: composite material made of vinyl ester resin (20% by weight), glass fibers of type "E" (80% by weight) (Tecniconsult S.p.A.), having the following characteristics: - flexural modulus, measured according to Standard D790-03, at 23°C, of 48 GPa; - ultimate tensile, strength measured according to Standard ASTM D3916-02, at 23°C, of 1450 MPa; - tensile modulus, measured according to Standard ASTM D3916-02, at 23°C, of 50 GPa; - specific gravity, measured according to Standard ASTM D792-00, of 2.1 g/cm³; ****: sum obtained by adding the breaking load of each metal elongated element forming the bead core B (comparative); or sum obtained by adding the breaking load of each metal elongated element and the breaking load of each elongated element made of composite material forming the bead core A (invention), said breaking load being measured according to Standard ASTM D4975-02. | | |

The bead core A according to the present invention was obtained by using a strip element in which the sequence of the axially adjacent elongated elements was the following: "MCMCM", where "M" was the metal elongated element and "C" was the composite material elongated element.

Table 1 shows that the weight of the bead core A according to the present invention is remarkably lower (< 30%) than the weight of a conventional bead core B which is made of steel elements only.

Furthermore, Table 1 shows that, in spite of the remarkable reduction of the overall bead core weight, the minimum theorical breaking load of the bead core A has not been negatively affected.

### Example 2

A bead core (bead core C) similar to those described with reference to the eleventh embodiment of the present invention shown in Figure 12 was obtained by using an elongated element made of steel which is welded end-to-end so as to form a circle (central core), around which an elongated element made of composite material is wound (S direction) and finally joined to itself to form a first sheath layer. Then, the same elongated element made of a composite material is wound (Z direction) around said first sheath layer and finally joined to itself to form a second sheath layer radially external to said first sheath layer so as to obtain a "round cable" bead core having the following configuration: 1x1.5 mm+(6S+12Z)x1.3 mm.

A "round cable" bead core (bead core D) having the same configuration 1x1.5 mm+(6S+12Z)x1.3 mm of bead core C, was manufactured with conventional steel wires.

The characteristics of the obtained bead cores are given in Table 2 below.

**TABLE 2**

| | Bead core C (invention) | Bead core D (comparative) |
|---|---|---|
| Bead core | "round cable" 1x1.5 mm+(6+12)x1.3 mm | "round cable" 1x1.5 mm+(6+12)x1.3 mm |
| Circumference of the drum* | 1048±1.5 mm | 1048±1.5 mm |
| Bead core diameter | 6.70±0.2 mm | 6.70±0.2 mm |
| Number of metal elongated elements in central core | 1 | 1 |
| Diameter of the metal elongated element | 1.50±0.03 mm | 1.50±0.03 mm |
| Number of elongated elements made of composite material** | 2 | - |
| Elongated element made of composite material** | Glassline^{®} Getev 130/101 | - |
| Diameter of the elongated element made composite material** | 1.3±0.04 mm | - |
| Weight of the bead core | 80.0 g | 180.0 g |
| Minimum theorical breaking load*** of the bead core | 42.10 kN | 47.83 kN |
| Index of flexional stiffness**** | 92.7 | 100 |

| | | |
|---|---|---|
| *: circumference of the drum on which the metal elongated element forming the central core of the bead core is wound; **: Glassline^{®} Getev 130/101: composite material made of vinyl ester resin (20% by weight), glass fibers of type "E" (80% by weight) (Tecniconsult S.p.A.) having the following characteristics: - flexural modulus, measured according to Standard D790-03, at 23°C, of 48 GPa; - ultimate tensile, strength measured according to Standard ASTM D3916-02, at 23°C, of 1450 MPa; - tensile modulus, measured according to Standard ASTM D3916-02, at 23°C, of 50 GPa; - specific gravity, measured according to Standard ASTM D792-00, of 2.1 g/cm³; ***: sum obtained by adding the breaking load of each metal elongated element forming both the central core and the two sheat layers around the central core of the bead core D (comparative); or sum obtained by adding the breaking load of the metal elongated element forming the central core and the breaking load of each elongated element made of composite material forming the two sheath layers around the central core of the bead core C (invention), said breaking load being measured according to Standard ASTM D4975-02; ****: determined by inserting the "round cable" bead core onto a dynamometer. The flexional stiffness values are expressed as a percentage with respect to the values of the comparative "round cable" bead core (bead core (D) fixed at 100 (100 corresponds to the force (N) applied to obtain a 50 mm of crushing of the "round cable" bead core). | | |

Table 2 shows that the weight of the bead core C according to the present invention is remarkably lower (< 60%) than the weight of a conventional bead core D which is made of steel elements only.

Moreover, Table 2 shows that the flexional stiffness of the bead core C according to the present invention has not been negatively affected.

Furthermore, Table 2 shows that, in spite of the remarkable reduction of the overall bead core weight, the minimum theorical breaking load of the bead core C has not been negatively affected.

## Claims

1. Tire comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said at least one bead core comprises:
- at least one first elongated element comprising at least one composite material comprising a plurality of elongated fibers embedded in a polymeric material, said composite material having a flexural modulus, measured according to Standard ASTM D790-03, at 23°C, not lower than or equal to 10 GPa;
- at least one second elongated element comprising at least one metal wire.

2. Tire according to claim 1, wherein said composite material has a flexural modulus, measured according to Standard ASTM D790-03, at 23°C, of from 20 GPa to 200 GPa.

3. Tire according to any one of the preceding claims, wherein said composite material has an ultimate tensile strength, measured according to Standard ASTM D3916-02, at 23°C, not lower than or equal to 600 MPa.

4. Tire according to any one of the preceding claims, wherein said composite material has a tensile modulus, measured according to Standard ASTM D3916-02, at 23°C, not lower than or equal to 20 Gpa.

5. Tire according to any one of the preceding claims, wherein said composite material has a specific gravity, measured according to Standard ASTM D792-00, lower than or equal to 3.0 g/cm³.

6. Tire according to any one of the preceding claims, wherein said polymeric material has a flexural modulus, measured according to Standard ASTM D790-03, at 23°C, not lower than or equal to 0.5 GPa.

7. Tire according to any one of the preceding claims, wherein said polymeric material has an ultimate tensile strength, measured according to Standard ASTM D638-03, at 23°C, not lower than or equal to 40 MPa.

8. Tire according to any one of the preceding claims, wherein said polymeric material is selected from thermoplastic resins, termosetting resins, or mixtures thereof.

9. Tire according to claim 8, wherein said thermoplastic resins are selected from: nylon-6,6, nylon-6, nylon-4,6, polyester (such as, polyethylene terephthalate, polyethylene naphthalate), polyether ether ketone, polycarbonate, polyacetal, or mixtures thereof.

10. Tire according to claim 9, wherein said thermosetting resins are selected from: vinyl-ester resins, epoxy resins, unsaturated polyester resin (such as, isophthalic polyester resins), phenolic resins, melamine resins, polyimide resins, bismaleimide resins, furan resins, silicone resins, allyl resins, or mixtures thereof.

11. Tire according to any one of the preceding claims, wherein said elongated fibers have an ultimate tensile strength, measured according to Standard ASTM D885-03, not lower than or equal to 1500 MPa.

12. Tire according to any one of the preceding claims, wherein said elongated fibers have a tensile modulus, measured according to Standard ASTM D885-03, not lower than or equal to 50 GPa.

13. Tire according to any one of the preceding claims,
wherein said elongated fibers are selected from: glass fibers, aromatic polyamide fibers, polyvinyl alcohol fibers, carbon fibers, or mixtures thereof.

14. Tire according to any one of the preceding claims, wherein said elongated fibers are present in the composite material in an amount of from 30% by weight to 95% by weight with respect to the total weight of the composite material.

15. Tire according to any one of the preceding claims, wherein said first elongated element has a diameter of from 0.2 mm to 3.0 mm.

16. Tire according to any one of the preceding claims,
wherein said second elongated is made of steel.

17. Tire according to any one of the preceding claims, wherein said second elongated consists of a metal monofilament.

18. Tire according to any one of claims 1 to 16, wherein said second elongated is obtained by stranding at least two metal wires.

19. Tire according to any one of the preceding claims, wherein said second elongated element has a diameter of from 0.2 mm to 3.0 mm.

20. Tire according to any one of the preceding claims,
wherein said at least one bead core comprises a central core made of a second elongated element which is welded end-to-end so as to form a circle, around which a first elongated element is wound and finally joined to itself to form at least one sheath layer.

## Patentansprüche

1. Reifen, der umfasst:
eine Karkassenstruktur einer im Wesentlichen ringförmigen Gestalt, die gegenüberliegende seitliche Ränder aufweist, die mit entsprechenden rechten und linken Wulstrandstrukturen assoziiert sind, wobei die Wulstrandstrukturen wenigstens einen Wulstrandkern und wenigstens einen Wulstrandfüller umfassen;
eine Gürtelstruktur, die in einer radial äußeren Position bezüglich der Karkassenstruktur aufgebracht ist;
ein Laufflächenband, das auf der Gürtelstruktur radial überlagert ist;
ein Paar von Seitenwänden, die seitliche an gegenüberliegenden Seiten bezüglich der Karkassenstruktur angebracht sind;
wobei der wenigstens eine Wulstrandkern umfasst:
wenigstens ein erstes längliches Element, das wenigstens ein Verbundmaterial umfasst, das eine Mehrzahl von länglichen Fasern umfasst, die in einem Polymermaterial eingebettet sind, wobei das Verbundmaterial ein Elastizitätsmodul, gemessen gemäß dem Standard ASTM D790-03, bei 23°C, von nicht weniger als oder gleich 10 GPa aufweist;
wenigstens ein zweites längliches Element, das wenigstens einen Metalldraht umfasst.

2. Reifen nach Anspruch 1, bei dem das Verbundmaterial ein Elastizitätsmodul, gemessen gemäß dem Standard ASTM D790-03, bei 23°C, von 20 GPa bis 200 GPa aufweist.

3. Reifen nach einem der vorhergehenden Ansprüche, bei dem das Verbundmaterial eine Bruchfestigkeit, gemäß dem Standard ASTM D3916-02, bei 23°C, von nicht weniger als oder gleich 600 MPa aufweist.

4. Reifen nach einem der vorhergehenden Ansprüche, bei dem das Verbundmaterial ein Zugmodul, gemessen gemäß dem Standard ASTM D3916-02, bei 23°C, von nicht weniger als oder gleich 20 GPa aufweist.

5. Reifen nach einem der vorhergehenden Ansprüche, bei dem das Verbundmaterial eine spezifische Dichte, gemessen gemäß dem Standard ASTM D792-00, von weniger als oder gleich 3,0 g/cm³ aufweist.

6. Reifen nach einem der vorhergehenden Ansprüche, bei dem das Polymermaterial ein Elastizitätsmodul, gemessen gemäß dem Standard ASTM D790-03, bei 23°C, von nicht weniger als oder gleich 0,5 GPa aufweist.

7. Reifen nach einem der vorhergehenden Ansprüche, bei dem das Polymermaterial eine Bruchfestigkeit, gemessen gemäß dem Standard ASTM D638-03, bei 23°C, von nicht weniger als oder gleich 40 MPa aufweist.

8. Reifen nach einem der vorhergehenden Ansprüche, bei dem das Polymermaterial aus thermoplastischen Harzen, wärmehärtenden Harzen oder Mischungen davon ausgewählt ist.

9. Reifen nach Anspruch 8, bei dem die thermoplastischen Harze ausgewählt sind aus: Nylon-6,6, Nylon-6, Nylon-4,6, Polyester (wie beispielsweise PolyethylenTerephthalat, Polyethylen-Naphthalat), Polyethter-Ether-Keton, Polycarbonat, Polyacetal oder Mischungen davon.

10. Reifen nach Anspruch 9, bei dem die wärmehärtenden Harze ausgewählt sind aus: Vinylesterharze, Epoxidharze, ungesättigtes Polyesterharz (wie beispielsweise isopthalische Polyesterharze), Phenolharze, Melaminharze, Polymidharze, Bismalemidharze, Furanharze, Silikonharze, Allylharze oder Mischungen davon.

11. Reifen nach einem der vorhergehenden Ansprüche, bei dem die länglichen Fasern eine Bruchfestigkeit gemessen gemäß dem Standard ASTM D885-03, von nicht weniger als oder gleich 1.500 MPa aufweisen.

12. Reifen nach einem der vorhergehenden Ansprüche, bei dem die länglichen Fasern ein Zugmodul, gemessen gemäß dem Standard ASTM D885-03, von nicht weniger als oder gleich 50 GPa aufweisen.

13. Reifen nach einem der vorhergehenden Ansprüche, bei dem die länglichen Fasern ausgewählt sind aus: Glasfasern, aromatischen Polyamidfasern, Polyvinylalkoholfasern, Kohlefasern oder Mischungen davon.

14. Reifen nach einem der vorhergehenden Ansprüche, bei dem die länglichen Fasern in dem Verbundmaterial mit einem Betrag von 30 Gew.-% bis 95 Gew.-% bezüglich des Gesamtgewichts des Verbundmaterials vorhanden sind.

15. Reifen nach einem der vorhergehenden Ansprüche, bei dem das erste längliche Element einen Durchmesser von 0,2 mm bis 3,0 mm aufweist.

16. Reifen nach einem der vorhergehenden Ansprüche, bei dem das zweite längliche Element aus Stahl gefertigt ist.

17. Reifen nach einem der vorhergehenden Ansprüche, bei dem das zweite längliche Element aus einem Metallmonofillament besteht.

18. Reifen nach einem der Ansprüche 1 bis 16, bei dem das zweite längliche Element durch Verseilen von wenigstens zwei Metalldrähten erhalten wird.

19. Reifen nach einem der vorhergehenden Ansprüche, bei dem das zweite längliche Element einen Durchmesser von 0,2 mm bis 3,0 mm aufweist.

20. Reifen nach einem der vorhergehenden Ansprüche, bei dem der wenigstens eine Wulstrandkern einen zentralen Kern umfasst, der aus einem zweiten länglichen Element gefertigt ist, das so mittels Stoßverbindung geschweißt ist, dass dieses einen Kreis ausbildet, um den ein erstes längliches Element gewickelt ist und schließlich mit sich selbst verbunden ist, um wenigstens eine Mantelschicht auszubilden.

## Revendications

1. Pneu comprenant :
-- une structure de carcasse de forme sensiblement toroïdale, ayant des bords latéraux opposés associés à des structures de talon respectivement droite et gauche, ces structures de talon comprenant au moins une tringle et au moins un bourrage sur tringle ;
-- une structure de ceinture appliquée en position radialement extérieure relativement à la structure de carcasse ;
-- une bande de roulement superposée radialement sur la structure de ceinture ;
-- une paire de flancs appliqués latéralement sur des côtés opposés relativement à la structure de carcasse ;
dans lequel l'au moins une tringle comprend:
-- au moins un premier élément allongé comprenant au moins un matériau composite comprenant plusieurs fibres allongées noyées dans un matériau polymère, ce matériau composite ayant un module d'élasticité en flexion, mesuré selon la norme ASTM D790-03, à 23° C, non inférieur ou égal à 10 GPa ;
-- au moins un second élément allongé comprenant au moins un fil métallique.

2. Pneu selon la revendication 1, dans lequel ledit matériau composite a un module d'élasticité en flexion, mesuré selon la norme ASTM D790-03, à 23° C, de 20 GPa à 200 GPa.

3. Pneu selon l'une quelconque des revendications précédentes, dans lequel ledit matériau composite a une résistance à la rupture en traction, mesurée selon la norme ASTM D3916-02, à 23° C, non inférieure ou égale à 600 MPa.

4. Pneu selon l'une quelconque des revendications précédentes, dans lequel ledit matériau composite a un module d'élasticité en traction, mesuré selon la norme ASTM D3916-02, à 23° C, non inférieur ou égal à 20 GPa.

5. Pneu selon l'une quelconque des revendications précédentes, dans lequel ledit matériau composite a une masse spécifique, mesurée selon la norme ASTM D792-00, inférieure ou égale à 3,0 g/cm³.

6. Pneu selon l'une quelconque des revendications précédentes, dans lequel ledit matériau polymère a un module d'élasticité en flexion, mesuré selon la norme ASTM D790-03, à 23° C, non inférieur ou égal à 0,5 GPa.

7. Pneu selon l'une quelconque des revendications précédentes, dans lequel ledit matériau composite a une résistance à la rupture en traction, mesurée selon la norme ASTM D638-03, à 23° C, non inférieure ou égale à 40 MPa.

8. Pneu selon l'une quelconque des revendications précédentes, dans lequel ledit matériau polymère est choisi parmi les résines thermoplastiques, les résines thermodurcissables ou leurs mélanges.

9. Pneu selon la revendication 8, dans lequel les résines thermoplastiques sont choisies parmi : nylon-6,6, nylon-6, nylon-4,6, polyester (tel que polyéthylène téréphthalate, polyéthylène naphthalate), polyéther éther kétone, polycarbonate, polyacétal, ou leurs mélanges.

10. Pneu selon la revendication 9, dans lequel les résines thermodurcissables sont choisies parmi : les résines vinyle-ester, les résines époxy, la résine polyester insaturée (telle que les résines polyester isophthaliques), les résines phénoliques, les résines mélamine, les résines polyimides, les résines bismaléimides, les résines furanne, les résines silicones, les résines allyles, ou leurs mélanges.

11. Pneu selon l'une quelconque des revendications précédentes, dans lequel lesdites fibres allongées ont une résistance à la rupture en traction, mesurée selon la norme ASTM D885-03, non inférieure ou égale à 1500 MPa.

12. Pneu selon l'une quelconque des revendications précédentes, dans lequel lesdites fibres allongées ont un module d'élasticité en traction, mesuré selon la norme ASTM D885-03, non inférieur ou égal à 50 GPa.

13. Pneu selon l'une quelconque des revendications précédentes, dans lequel lesdites fibres allongées sont choisies parmi : les fibres de verre, les fibres de polyamide aromatique, les fibres de polyvinyle alcool, les fibres de carbone, ou leurs mélanges

14. Pneu selon l'une quelconque des revendications précédentes, dans lequel lesdites fibres allongées sont présentes dans le matériau composite à raison de 30 % en poids à 95 % en poids par rapport au poids total du matériau composite.

15. Pneu selon l'une quelconque des revendications précédentes, dans lequel ledit premier élément allongé a un diamètre de 0,2 mm à 3,0 mm.

16. Pneu selon l'une quelconque des revendications précédentes, dans lequel ledit second élément allongé est en acier.

17. Pneu selon l'une quelconque des revendications précédentes, dans lequel ledit second élément allongé est constitué d'un monofilament de métal.

18. Pneu selon l'une quelconque des revendications 1 à 16, dans lequel ledit second élément allongé est obtenu en toronnant au moins deux fils métalliques.

19. Pneu selon l'une quelconque des revendications précédentes, dans lequel ledit second élément allongé a un diamètre de 0,2 mm à 3,0 mm.

20. Pneu selon l'une quelconque des revendications précédentes, dans lequel ladite au moins une tringle comprend une tringle centrale faite d'un second élément allongé qui est soudé bout-à-bout pour former un cercle, autour duquel un premier élément allongé est enroulé puis finalement joint à lui-même pour former au moins une couche de gainage.
